# EUROPEAN PATENT SPECIFICATION

(11) **EP 3 531 365 B1**
(45) Date of publication and mention of the grant of the patent: **21.12.2022**
(21) Application number: 19157845.9
(22) Date of filing: 18.02.2019
(51) Int. Cl.: H04L 9/00, G06F 16/33, H04L 9/40, G06Q 40/02

(54) **COMPUTER SYSTEM, CONNECTION APPARATUS, AND PROCESSING METHOD USING TRANSACTION**
COMPUTERSYSTEM, VERBINDUNGSVORRICHTUNG UND VERARBEITUNGSVERFAHREN MIT VERWENDUNG VON TRANSAKTION
SYSTÈME INFORMATIQUE, APPAREIL DE CONNEXION ET PROCÉDÉ DE TRAITEMENT À L'AIDE DE TRANSACTION

(30) Priority: 22.02.2018 JP 2018030153
(43) Date of publication of application: 28.08.2019
(73) Proprietor: Hitachi, Ltd., Tokyo 100-8280 (JP)
(72) Inventor: Suzuki, Takayuki, Tokyo, 100-8280 (JP); Yamayoshi, Toshirou, Tokyo, 100-8280 (JP); Sato, Hisayoshi, Tokyo, 100-8280 (JP); Yoshino, Masayuki, Tokyo, 100-8280 (JP); Naganuma, Ken, Tokyo, 100-8280 (JP); Watanabe, Dai, Tokyo, 100-8280 (JP)
(74) Representative: Manitz Finsterwald Patent- und Rechtsanwaltspartnerschaft mbB

(56) References cited:
- WO-A1-2016/129259
- US-A1- 2015 046 450
- US-A1- 2017 177 898
- US-A1- 2017 279 605
- CAI CHENGJUN ET AL: "Hardening Distributed and Encrypted Keyword Search via Blockchain", 2017 IEEE SYMPOSIUM ON PRIVACY-AWARE COMPUTING (PAC), IEEE, 1 August 2017 (2017-08-01), pages 119-128, XP033264240, DOI: 10.1109/PAC.2017.36 [retrieved on 2017-12-04]

## Description

### BACKGROUND OF THE INVENTION

### 1. Field of the Invention

The present invention relates to a processing method of a transaction of a blockchain.

### 2. Description of the Related Art

In recent years, use of various virtual currencies including bit coin (registered trademark, the same applies hereinafter) is progressing. As a technology for realizing a virtual currency, a blockchain has been used.

The blockchain is a technology for collecting a certain number of processing requests including transaction details of a user, generating blocks, and connecting the blocks to manage data. In this specification, the processing request is described as a transaction.

The block includes a hash value calculated from a transaction stored in the previous block. In the blockchain, falsification of information stored in the block is made difficult by connecting the blocks with use of the hash value.

Further, the blockchain is realized as a peer-to-peer network (blockchain network), and all nodes constituting the blockchain network hold the connected blocks, making it more difficult to falsify information.

Since each node holds same information, it is possible to construct a system with high availability and high fault tolerance. As having the characteristics as described above, the use of a blockchain is being considered in various fields including the financial field.

Since transactions stored in the block are shared by all the nodes, the transactions can be viewed from any node. Therefore, transactions stored in blocks do not have confidentiality.

However, depending on a purpose, there are cases where it is desired to conceal a transaction itself. Therefore, for example, bit coin provides for the concealment of a transaction by anonymizing an address indicating a transmission destination or a transmission source of the transaction. Specifically, in a system that handles bit coin, an address is generated by calculating a hash value and the like from a public key held by a user.

Pieter Wuille, "Hierarchical Deterministic Wallets", Retrieved February 11, 2012, from <URL: https://github.com/bitcoin/bips/blob/master/bip-0032.mediawiki> discloses: generating key pairs, of a secret key and a public key, that are different in accordance with transaction details or a purpose; managing each key pair; and generating a plurality of addresses by using the key pairs selectively in accordance with transaction details or a purpose. Generating multiple key pairs allows a same user to use different addresses. Therefore, even in a case where transactions stored in the block are referred to by a third party, it is possible to conceal which transaction is of which user.

US 2017/177898 A1 teaches a blockchain storing encrypted data. To search for a specific transaction, US 2017/177898 A1 teaches to use a transaction identifier and a decryption key.

US 2015/046450 A1 teaches a searchable cipher system and no blockchain.

US 2017/279605 A1 relates to a sensor network and particularly to technology for Internet of things (IoT).

This document does not relate to a blockchain.

The document "Hardening Distributed and Encrypted Keyword Search via Blockchain" (2017 IEEE Symposium on Privacy-Aware Computing (PAC)) deals with an encrypted keyword search via blockchain

### SUMMARY OF THE INVENTION

In the method described in Pieter Wuille, "Hierarchical Deterministic Wallets", Retrieved February 11, 2012, from <URL: https://github.com/bitcoin/bips/blob/master/bip-0032.mediawiki>, the user is required to manage information of the key pairs. When a key pair is generated for each of transaction details or purposes in order to enhance anonymity, there are concerns that management of the key pair becomes complicated and a data amount to be managed also increases. In a case of a provider that provides connection service to a blockchain network, since it is required to manage information on multiple key pairs of all users, an increase in the data amount to be managed becomes a serious problem.

The present invention provides a blockchain that maintains anonymity and handles transactions including addresses that are easy to manage. The invention is defined by the subject-matter of the independent claims.

A representative example of the invention disclosed in the present application is as follows. That is, in a computer system including a plurality of processing nodes constituting a blockchain network for providing service using a blockchain, and a connection apparatus that connects to the blockchain network, the plurality of processing nodes hold ledger information that is information including a history of transaction information in the service and for managing a transaction, and is information in which a block including a plurality of the transactions is connected in a chronological order; the connection apparatus includes a connection processing unit that generates the transaction and transmits the transaction to at least one of the processing nodes; the connection processing unit includes an encryption processing unit that generates searchable ciphertext from a keyword based on a probabilistic encryption method; the encryption processing unit generates, from the keyword, the searchable ciphertext to be used as an address indicating a transmission source or a transmission destination of the transaction; and the connection processing unit generates the transaction including the searchable ciphertext.

According to one aspect of the present invention, a plurality of encrypted addresses can be generated from one keyword. This makes it possible to realize a blockchain that handles transactions including addresses that are easy to manage, while maintaining anonymity. The problems, configurations, and effects other than those described above will be clarified by the description of the embodiments below.

### BRIEF DESCRIPTION OF THE DRAWINGS

Fig. 1 is a diagram showing an example of a configuration of a system according to a first embodiment;
Fig. 2 is a diagram showing an example of a configuration of a connection apparatus according to the first embodiment;
Fig. 3 is a diagram showing an example of a configuration of a processing node according to the first embodiment;
Fig. 4 is a view showing an example of user management information according to the first embodiment;
Fig. 5 is a view showing an example of ledger information according to the first embodiment;
Fig. 6 is a sequence diagram describing a flow of transaction generation processing in the system according to the first embodiment;
Fig. 7 is a flowchart describing an example of address generation processing executed by the connection apparatus according to the first embodiment;
Fig. 8 is a flowchart describing an example of generation processing of filter generation information by the connection apparatus according to the first embodiment;
Fig. 9 is a flowchart describing an example of generation processing of a filter by the processing node according to the first embodiment;
Fig. 10 is a sequence diagram describing a flow of transaction search processing in the system according to the first embodiment;
Fig. 11 is a flowchart describing an example of search processing executed by the processing node according to the first embodiment;
Fig. 12 is a view showing an example of user management information according to a second embodiment;
Fig. 13 is a flowchart describing an example of address generation processing executed by a connection apparatus according to the second embodiment; and
Fig. 14 is a flowchart describing an example of key pair generation processing executed by a connection apparatus according to a third embodiment.

### DESCRIPTION OF THE PREFERRED EMBODIMENTS

Hereinafter, embodiments of the present invention will be described with reference to the drawings. However, the present invention is not to be construed as being limited to the description of the embodiments described below. Those skilled in the art can easily understand that specific configurations can be changed without departing from the spirit or gist of the present invention.

In the configuration of the invention described below, the same or similar configurations or functions will be denoted by the same reference numerals, and redundant description will be omitted.

The expression such as "first", "second", "third", or the like in this specification and the like is given to identify constituent elements, and do not necessarily limit the number or order.

The positions, sizes, shapes, ranges, and the like of the individual configurations illustrated in drawings and the like may not indicate actual positions, sizes, shapes, ranges, and the like, for facilitating understanding of the invention. Therefore, the present invention is not limited by the positions, sizes, shapes, ranges, and the like disclosed in drawings and the like.

### First embodiment

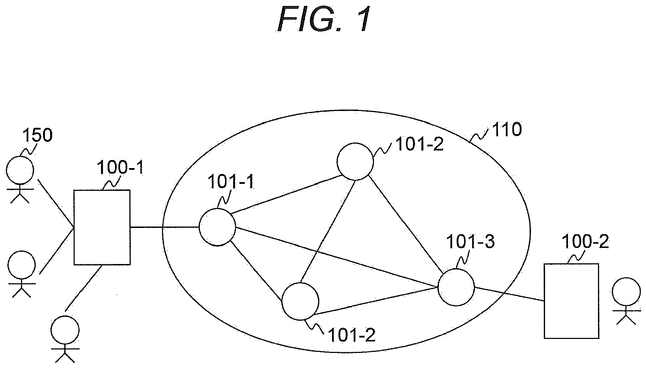

Fig. 1 is a diagram showing an example of a configuration of a system according to a first embodiment.

The system according to the first embodiment includes at least one connection apparatus 100 and a plurality of processing nodes 101. The at least one connection apparatus 100 and the plurality of processing nodes 101 are connected to each other via a network such as a local area network (LAN) and a wide area network (WAN).

The plurality of processing nodes 101 constitute a blockchain network 110 that is to provide service using a blockchain. The connection apparatus 100 provides connection service to the blockchain network 110. A user 150 uses the connection apparatus 100 to utilize the service provided by the blockchain network 110. It is assumed that virtual currency transaction service is provided in the first embodiment.

The processing node 101 connected with the connection apparatus 100 may be a processing node 101 constructed by the user 150 itself, or may be a processing node 101 constructed by another user 150.

There are two methods for connecting to the blockchain network 110.

One connection method is a method of using the connection apparatus 100 held by the user 150 itself to connect to the blockchain network 110. This connection method can be realized, for example, by installing software that realizes a function of the connection apparatus 100, in a terminal such as a personal computer and a smartphone held by the user 150.

As another connection method, there is a method of connecting to the blockchain network 110 via the connection apparatus 100 held by a provider of the connection service, such as a bank or a securities company. This connection method can be realized, for example, by providing connection service to the blockchain network 110 via the connection apparatus 100 held by the provider of the connection service, to the user 150 who has made a contract with the provider of the connection service. Meanwhile, the provider of the connection service holds a plurality of connection apparatuses 100. Further, the blockchain network 110 may be constructed with use of the processing node 101 held by the provider.

In the above two connection methods, a basic configuration is the same while a scale of a use form is different.

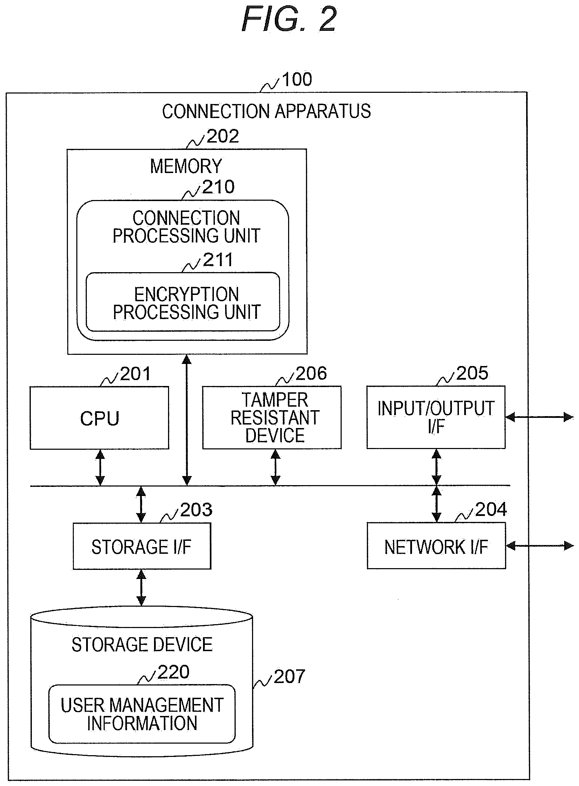

Fig. 2 is a diagram showing an example of a configuration of the connection apparatus 100 according to the first embodiment.

The connection apparatus 100 includes a CPU 201, a memory 202, a storage interface 203, a network interface 204, an input/output interface 205, a tamper resistant device 206, and a storage device 207.

The CPU 201, the memory 202, the storage interface 203, the network interface 204, the input/output interface 205, and the tamper resistant device 206 are connected to each other via an internal bus. Further, the storage device 207 is connected to the storage interface 203.

The CPU 201 executes a program stored in the memory 202. The CPU 201 operates as any functional unit (module) by executing processing in accordance with the program.

The memory 202 stores information and a program to be executed by the CPU 201. The memory 202 according to the first embodiment stores a program for realizing a connection processing unit 210. The connection processing unit 210 controls connection service to the blockchain network 110. The connection processing unit 210 includes an encryption processing unit 211. Further, the memory 202 holds a service encryption key to be used for encryption, decryption, and the like of a transaction, and an encryption key to be used in a probabilistic encryption method.

The encryption processing unit 211 executes encryption processing of the probabilistic encryption method. As will be described later, ciphertext generated by the encryption processing unit 211 is used as an address indicating an issue source or an issue destination of a transaction. Here, the probabilistic encryption method is an encryption algorithm for generating random ciphertext from plaintext. In the probabilistic encryption method, plaintext and ciphertext have one-to-many correspondence. The ciphertext generated by the encryption processing unit 211 is searchable ciphertext. As a method for generating the searchable encryption based on the probabilistic encryption method, for example, the method described in WO 2012/077541 A is adopted.

In this specification, ciphertext generated based on the probabilistic encryption method is also described as searchable ciphertext.

Meanwhile, in addition to the problem described in the "SUMMARY OF THE INVENTION", there is a problem as follows. In a case of acquiring a transaction of a specific user from transactions stored in a block, it is necessary to search a transaction for each address managed by the user. Therefore, there is a problem that efficient search of a transaction is difficult. As will be described later, this problem can also be solved by using searchable ciphertext as an address.

The storage interface 203 is an interface for connecting to the storage device 207. The network interface 204 is an interface for connecting to another device such as the processing node 101 via a network. The input/output interface 205 is an interface for connecting to an input device such as a keyboard or a mouse, and to an output device such as a display.

The tamper resistant device 206 is a device to provide a tamper resistant area that stores information required to be secretly and safely handled in the service using the blockchain network 110, and is used for executing safe processing. For example, the encryption processing unit 211 executes processing by using the tamper resistant area.

The tamper resistant area is realized with use of dedicated hardware implemented on the connection apparatus 100, but is not limited to this. For example, the tamper resistant area may be realized by an operation for ensuring security, such as using the connection apparatus 100 offline or managing data with a device different from the connection apparatus 100. In addition, the tamper resistant area may be realized with use of a device connected via each interface.

Whereas, in a case where a risk in the service is tolerated, the connection apparatus 100 may not necessarily use the tamper resistant area realized with use of the tamper resistant device 206 or the like.

The storage device 207 is a storage device such as a hard disk drive (HDD) or a solid state drive (SSD). The storage device 207 according to the first embodiment stores user management information 220.

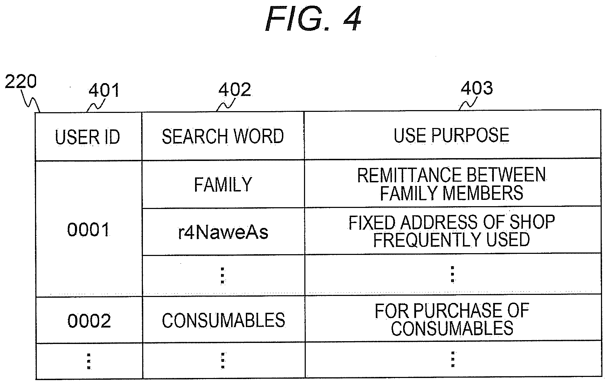

The user management information 220 stores information on the user 150. The user management information 220 is information to be used for generating an address. Details of the user management information 220 will be described with reference to Fig. 4.

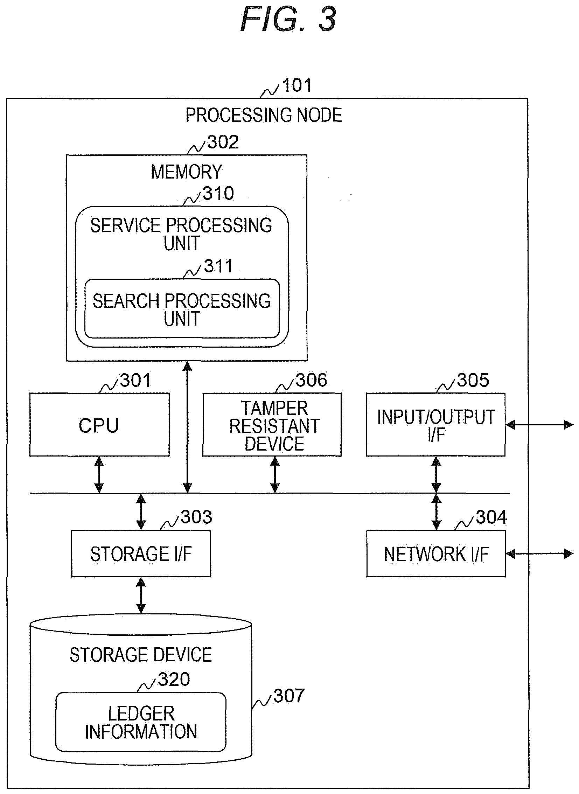

Fig. 3 is a diagram showing an example of a configuration of the processing node 101 according to the first embodiment.

The processing node 101 has the same device configuration as the connection apparatus 100, and includes a CPU 301, a memory 302, a storage interface 303, a network interface 304, an input/output interface 305, a tamper resistant device 306, and a storage device 307.

The memory 302 according to the first embodiment stores a program for realizing a service processing unit 310. The service processing unit 310 manages ledger information 320, which will be described later, and controls processing of the service using the blockchain network 110. The service processing unit 310 includes a search processing unit 311. The search processing unit 311 executes search processing of a transaction based on an address generated by the encryption processing unit 211.

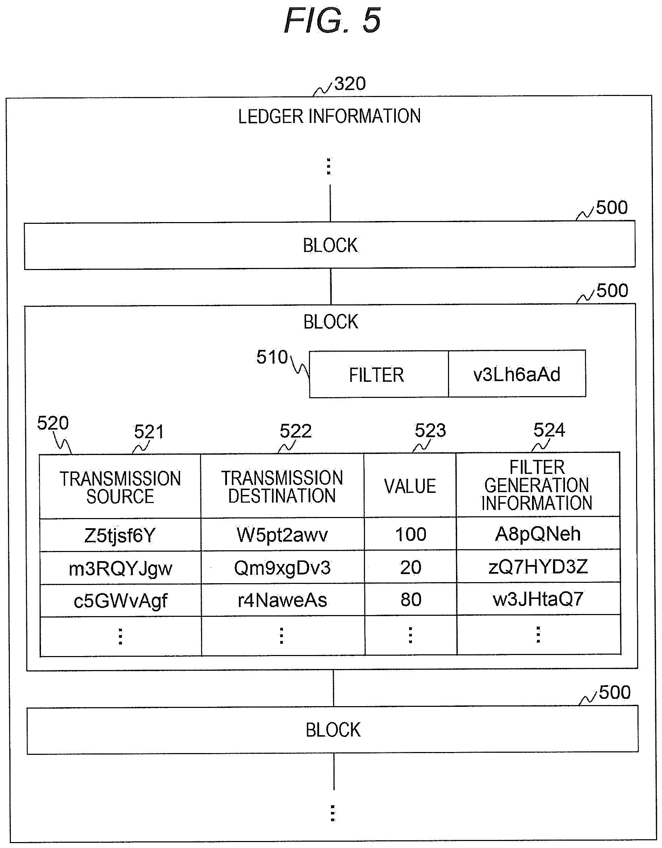

The storage device 307 according to the first embodiment stores the ledger information 320 for managing transactions transmitted by the connection apparatus 100. Details of the ledger information 320 will be described with reference to Fig. 5.

Fig. 4 is a view showing an example of the user management information 220 according to the first embodiment.

The user management information 220 includes an entry formed by a user ID 401, a search word 402, and a use purpose 403. One entry corresponds to one user 150. Note that a structure of the entry is an example and is not limited to this. For example, the entry may include a field for storing various kinds of management information required for processing.

The user ID 401 is a field for storing identification information of the user 150. The search word 402 is a field for storing a keyword (search word) for generating searchable ciphertext to be used as an address. The use purpose 403 is a field for storing a use purpose of the user 150 for the service.

In the first embodiment, the search word and the use purpose are associated, and the user 150 can issue a transaction according to the use purpose without storing the search word. This can improve convenience of the user 150.

The user management information 220 according to the first embodiment is stored in the storage device 207, but may be stored in the tamper resistant area (tamper resistant device 206) as required.

Fig. 5 is a view showing an example of the ledger information 320 according to the first embodiment.

The ledger information 320 is formed by a plurality of blocks 500 connected in a chronological order. Each block 500 is connected to the previous block 500 in a time series. The block 500 includes a hash value calculated from data contained in the connected block 500. Further, the block 500 also includes a filter 510 and transaction information 520.

The filter 510 is information to be used for searching for a specific transaction from among a plurality of transactions stored in the block 500.

The transaction information 520 is information for management of a transaction indicating transaction details of the user 150. The transaction information 520 includes an entry formed by a transmission source 521, a transmission destination 522, a value 523, and filter generation information 524. One entry corresponds to one transaction.

The transmission source 521, the transmission destination 522, and the value 523 are fields for storing transaction details. In the first embodiment, since virtual currency transaction service is assumed, there are provided fields for storing a transmission source and a transmission destination of a virtual currency, and a virtual currency value (amount of money). Note that the above transaction details are merely examples and are not limited to these.

The transmission source 521 is a field for storing an address, which is searchable ciphertext generated from a search word.

The transmission destination 522 is a field for storing an address obtained in advance from the transmission destination user 150 or the like. The address stored in the transmission destination 522 may not necessarily be searchable ciphertext. However, in notifying the address, the transmission destination user 150 notifies, as an address, the searchable ciphertext generated by processing described later.

The value 523 is a field for storing a transaction amount of a virtual currency.

The filter generation information 524 is a field for storing filter generation information to be used for generating the filter 510.

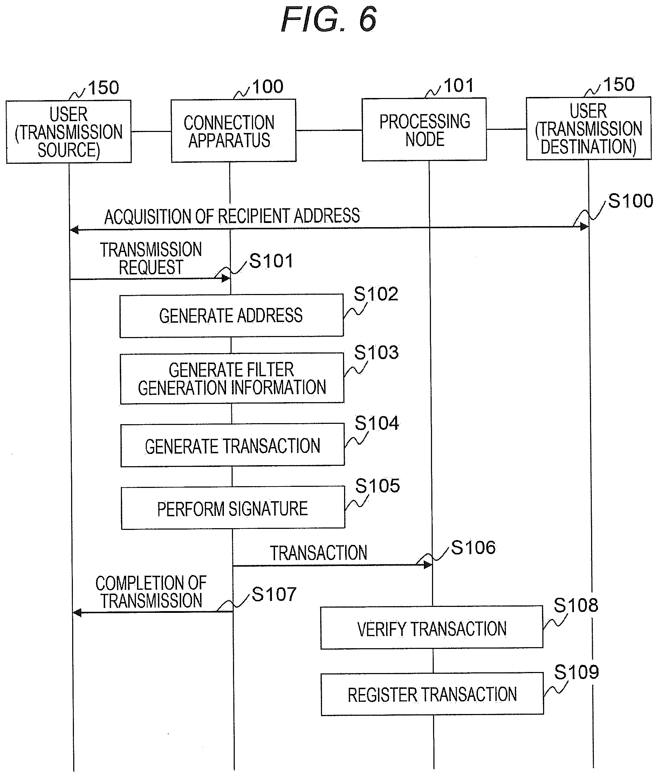

Fig. 6 is a sequence diagram describing a flow of transaction generation processing in the system according to the first embodiment.

An address of the transmission destination user 150 is acquired in advance between the transmission source user 150 and the transmission destination user 150 (step S100). As a method for acquiring the address, for example, a method such as acquiring by using E-mail and posting on a website is considered. Note that the present invention is not limited by the method of acquiring the address.

The transmission source user 150 inputs a transmission request to the connection apparatus 100 (step S101). The transmission request may be inputted by operating a terminal held by the user 150, or may be inputted by operating an input device connected to the connection apparatus 100.

The transmission request includes either a search word to be used for generating an address, or information to specify a use purpose for specifying a search word. Further, the transmission request includes information indicating an amount of money in a remittance transaction and a destination of the transmission.

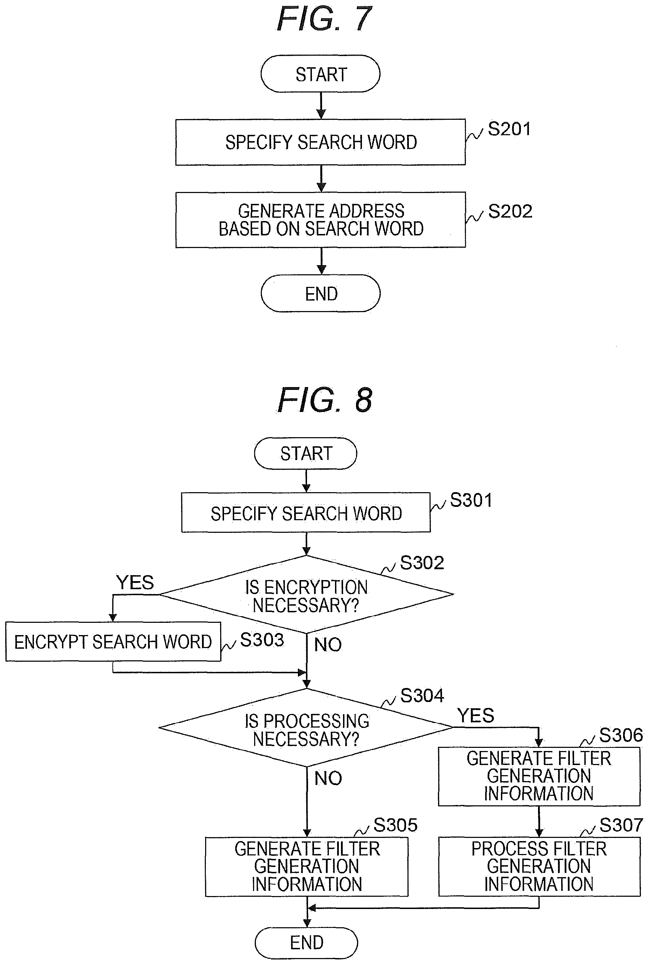

Next, when receiving the transmission request, the connection apparatus 100 generates a searchable encryption as an address from the search word, by using an encryption key (first encryption key) of the probabilistic encryption method (step S102). Details of the address generation processing will be described with reference to Fig. 7.

Next, the connection apparatus 100 generates filter generation information from the search word, by using an encryption key (second encryption key) of the probabilistic encryption method (step S103). Specifically, the connection apparatus 100 performs processing similar to the generation processing of a Bloom filter or an accumulator, to generate the filter generation information. Details of the generation processing of the filter generation information will be described with reference to Fig. 8.

Next, the connection apparatus 100 generates a transaction including the address and the filter generation information (step S104), and generates a signed transaction by performing an electronic signature on the transaction by using a service secret key (step S105). The transaction includes the filter generation information.

Next, the connection apparatus 100 transmits the signed transaction to the blockchain network 110 (step S106). Specifically, the signed transaction is transmitted to the processing node 101 constituting the blockchain network 110. Further, the connection apparatus 100 notifies the transmission source user 150 of completion of the transmission (step S107).

When receiving the signed transaction, the processing node 101 verifies the transaction (step S108). Specifically, the processing node 101 verifies the signed transaction by using a service public key distributed from the transmission source user 150.

When the verification is successful, the processing node 101 registers the transaction in the ledger information 320 in the block 500 (step S109).

By storing the transaction in block 500, a remittance transaction from the transmission source user 150 to the transmission destination user 150 is established. Therefore, the transmission destination user 150 is not explicitly notified that the remittance transaction has been established. When the transmission destination user 150 is monitoring transactions and blocks, the remittance transaction can be confirmed by receiving notification from the processing node 101 constituting the blockchain network 110.

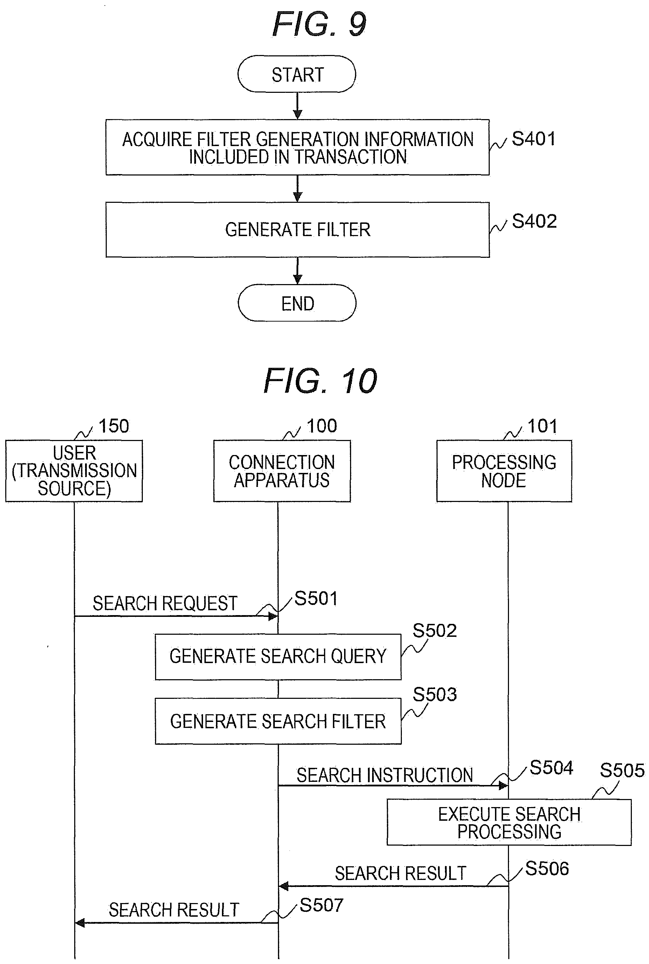

Details of the filter generation processing executed at a time of generating the block will be described with reference to Fig. 9.

Whereas, in a case where it is not necessary to include the filter 510, the connection apparatus 100 may not necessarily generate the filter generation information, and the processing node 101 may not necessarily generate the filter at a time of generating the block.

Fig. 7 is a flowchart describing an example of address generation processing executed by the connection apparatus 100 according to the first embodiment.

The processing described below is executed by the encryption processing unit 211 called by the connection processing unit 210 that has received a transmission request.

The encryption processing unit 211 specifies a search word (step S201).

Specifically, the encryption processing unit 211 determines whether or not a search word is included in the transmission request. When the search word is included in the transmission request, the encryption processing unit 211 uses the search word as it is. When the search word is not included in the transmission request, the encryption processing unit 211 analyzes the transmission request, refers to the user management information 220 based on the analysis result, and specifies the search word based on the identification information of the user, the use purpose, and the like.

Next, the encryption processing unit 211 generates searchable ciphertext from the search word by using the first encryption key (step S202).

The connection processing unit 210 uses the searchable ciphertext generated by the encryption processing unit 211 as an address to be used in the blockchain. Since the searchable ciphertext is generated based on the probabilistic encryption method, it is possible to generate a random address for one search word. This makes it possible to realize anonymization of the transmission source.

When a service provider such as a bank or a securities company provides connection service to the blockchain network 110, it is assumed that the service provider assigns identification information, such as a user ID, to the user 150. Therefore, using the user ID as a search word enables generation of a plurality of searchable addresses. This makes it possible to realize anonymization of the address of the user in the blockchain network 110.

A conventional connection apparatus 100 has been required to hold a plurality of addresses, but the connection apparatus 100 according to the first embodiment is not required to hold a plurality of addresses.

Further, in the first embodiment, by the connection apparatus 100 registering a search word in the user management information 220, it is possible to generate an anonymized address without designation of a search word by the user 150. Alternatively, an address may be generated based on an input obtained by synthesizing a user ID and a search word registered in the user management information 220. This can improve convenience of the user 150.

Fig. 8 is a flowchart describing an example of generation processing of filter generation information by the connection apparatus 100 according to the first embodiment.

The processing described below is executed by the encryption processing unit 211 called by the connection processing unit 210 that has received a transmission request. Meanwhile, the generation processing of the filter generation information may be synchronized with the generation processing of an address, or may not be synchronized.

The encryption processing unit 211 specifies a search word (step S301).

The encryption processing unit 211 determines whether or not encryption of the search word is necessary (step S302). Whether or not encryption of the search word is necessary is set in advance.

The reason for encrypting the search word is to conceal a correspondence between the search word and the filter generation information. When the search word is encrypted with use of deterministic encryption, it is necessary to disclose the correspondence between the encrypted search word and the filter generation information. However, unless the encryption key used for encrypting the search word leaks, the possibility that the search word is known to others is low.

Meanwhile, in order to improve security, the encryption key used in the deterministic encryption is desirably managed by the tamper resistant device 206, as a key different from the encryption key used in the probabilistic encryption method.

When it is determined that encryption of the search word is not necessary, the encryption processing unit 211 proceeds to step S304.

When it is determined that encryption of the search word is necessary, the encryption processing unit 211 encrypts the search word (step S303). Thereafter, the encryption processing unit 211 proceeds to step S304.

In step S304, the encryption processing unit 211 determines whether or not it is necessary to process the filter generation information (step S304). Whether or not it is necessary to process the filter generation information is set in advance.

The reason for processing the filter is to conceal a correspondence between the search word and the filter generation information.

When it is determined that it is not necessary to process the filter generation information, the encryption processing unit 211 generates filter generation information by using a plaintext search word or a cryptogram search word (step S305). Thereafter, the encryption processing unit 211 outputs the generated filter to the connection processing unit 210, and ends the processing.

The filter generation information is generated based on processing similar to the generation processing of the Bloom filter or the accumulator.

When it is determined that it is necessary to process the filter generation information, the encryption processing unit 211 generates filter generation information by using a plaintext search word or a cryptogram search word (step S306). Further, the encryption processing unit 211 processes the generated filter generation information (step S307). Thereafter, the encryption processing unit 211 outputs the processed filter generation information to the connection processing unit 210, and ends the processing.

As a method for processing the filter generation information, for example, it is conceivable to convert a portion that is either "0" or "1" at a place not related to the search word into an opposite value. However, the place to change the value is not fixed so that the processed filter generation information does not become the same in a case of processing same filter generation information.

Note that the above-described processing method is an example and is not limited to this. A plurality of processing methods may be selected in accordance with importance of the transaction.

Meanwhile, information indicating the processing method and a degree of processing may be included in the encryption processing unit 211, or may be stored in the memory 202. Further, the information may be managed by an external device.

Fig. 9 is a flowchart describing an example of generation processing of the filter 510 by the processing node 101 according to the first embodiment.

The processing described below is executed when the service processing unit 310 generates the block 500. Note that a timing for generating the block 500 may be, for example, a case where a certain number of transactions are accumulated.

The service processing unit 310 acquires filter generation information included in a transaction included in the block 500 (step S401). Note that transactions included in the block 500 are determined by any algorithm.

Next, the service processing unit 310 generates the filter 510 by using the acquired filter generation information (step S402). Thereafter, the service processing unit 310 ends the generation processing of the filter 510.

For example, the service processing unit 310 executes a bit operation such as an AND operation or an XOR operation for synthesizing the acquired filter generation information to generate the filter 510. Note that the above-described generation method of the filter 510 is an example and is not limited to this.

After generating the filter 510, the service processing unit 310 generates the block 500 including the generated filter 510 and a plurality of transactions, and adds the block 500 to the ledger information 320.

Originally, it is desirable to be able to use filter generation information as the filter 510. However, since the generated filter 510 always becomes the same data, there is a possibility that the search word is inferred. Although it is conceivable to use, as the filter 510, the filter generation information encrypted by the probabilistic encryption method, it is difficult to generate the filter 510 by using a plurality of pieces of filter generation information while holding information included in ciphertext. Therefore, the connection apparatus 100 generates a filter that allows a certain level of false positive.

Fig. 10 is a sequence diagram describing a flow of transaction search processing in the system according to the first embodiment.

The user 150 inputs a search request to the connection apparatus 100 (step S501). The search request includes identification information of the user 150 and a search word used at a time of generating a search target transaction.

Alternatively, the search request may include a use purpose instead of the search word. In this case, the connection apparatus 100 may refer to the user management information 220 to specify the search word.

When receiving the search request, the connection apparatus 100 generates a search query (step S502).

Specifically, the encryption processing unit 211 generates searchable ciphertext, with use of the search word included in the search request and of the first encryption key. The connection apparatus 100 generates a search query including ciphertext generated as a search key.

Next, the connection apparatus 100 generates a search filter (step S503).

Specifically, the connection processing unit 210 generates filter generation information as a search filter. Since generation processing of the filter generation information is the same as the processing described with reference to Fig. 8, the description will be omitted.

In a case where the filter generation information included in the transaction has been generated with use of the encrypted search word, the connection apparatus 100 generates the search filter by using the encrypted search word. Further, in a case where the filter generation information included in the transaction has been processed, the connection apparatus 100 generates the processed filter generation information as the search filter in accordance with a similar creation procedure.

Meanwhile, the connection apparatus 100 may not necessarily generate a search filter when searching on a block basis is not performed.

Next, the connection apparatus 100 transmits a search instruction including the search query and the search filter, to the processing node 101 (step S504).

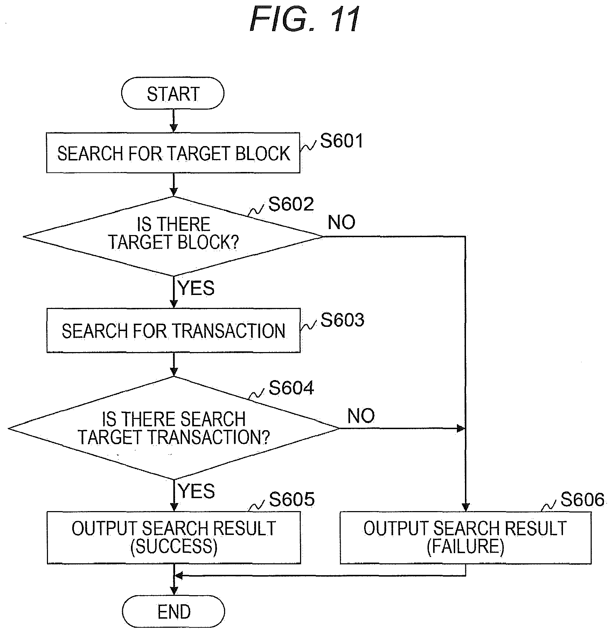

When receiving the search instruction, the processing node 101 executes search processing (step S505). Details of the search processing will be described with reference to Fig. 11.

The processing node 101 transmits a search result to the connection apparatus 100 (step S506). The connection apparatus 100 notifies the user 150 of the received search result (step S507).

When the processing node 101 has been able to search for the transaction, the search result includes the searched transaction, and when the processing node 101 has not been able to search for the transaction, the search result includes a value indicating failure.

The search processing of a search target transaction is normally performed on all transactions included in the ledger information 320. Since the block constituting the blockchain includes a plurality of transactions, the search processing becomes efficient by specifying the block 500 including the search target transaction and then performing a search on a transaction basis. In order to realize the above-mentioned search processing, in the conventional technique, the block 500 including the search target transaction is specified with use of a Bloom filter, an accumulator, and the like.

However, in the first embodiment, since the searchable ciphertext generated by the probabilistic encryption method is used as an address, it is not possible to perform a search on a block basis even if a filter is generated from the address included in the transaction at a time of generating the block 500. Therefore, the processing node 101 according to the first embodiment generates a dedicated filter (filter 510) at a time of generating the block 500, and generates a dedicated filter (search filter) at a time of searching for the block 500.

Fig. 11 is a flowchart describing an example of search processing executed by the processing node 101 according to the first embodiment.

The following processing is executed by the search processing unit 311 called by the service processing unit 310 that has received the search instruction.

The search processing unit 311 searches for the target block 500 including the search target transaction by using the search filter included in the search instruction (step S601), and determines whether or not there is the target block 500 (step S602).

Specifically, the search processing unit 311 executes matching processing on the filter 510 included in the block 500 and the search filter. Since the method of searching for the target block 500 with use of the filter is similar to the search method using the Bloom filter, the accumulator, and the like, a detailed description will be omitted.

When there is no target block 500, the search processing unit 311 outputs a search result including a value indicating failure (step S606). Thereafter, the search processing unit 311 ends the search processing.

When there is the target block 500, the search processing unit 311 searches the target block 500 for the search target transaction based on the search query (step S603), and determines whether or not there is the search target transaction (step S604).

For example, the method described in WO 2012/077541 A is used as a search method of a transaction based on a search query. While values of addresses generated from a same search word are different from each other, multiple transactions can be searched by a single search with a search query based on searchable ciphertext.

In the first embodiment, the filter 510 allowing false positive is used to make it difficult to infer the search word. Therefore, there is a possibility that the target block 500 does not include the search target transaction. Accordingly, all transactions included in the target block 500 are set to be processing targets by the search processing unit 311.

When there is no search target transaction in the target block 500, the search processing unit 311 outputs a search result including a value indicating failure (step S606). Thereafter, the search processing unit 311 ends the search processing.

When there is the search target transaction in the target block 500, the search processing unit 311 outputs the search result including the searched transaction (step S605) .

The address according to the first embodiment is searchable ciphertext. Therefore, the search processing unit 311 can search for all the transactions including the ciphertext included in the search query, that is, the address generated from the search word. In a case where the provider of the connection service cooperates with another system, for example, in a case where a bank receives a request from the user 150 and transfers a virtual currency managed in the blockchain network 110 to a bank account of the user 150, the processing node 101 can search for all transactions of the user 150 by once or less number of times than that of conventional search processing.

When the target block 500 is searched, the connection apparatus 100 may generate filter generation information, and may include the filter generation information as the search filter in the search instruction. In this method, since all search filters generated from a same search word are different, the risk of information leakage can be suppressed.

As described above, since the system according to the first embodiment uses the searchable ciphertext generated by the probabilistic encryption method as an address, the user 150 and the service provider are not required to manage a plurality of addresses.

Further, since the address generated by the probabilistic encryption method is searchable ciphertext, transactions related to a specific purpose of a specific user can be searched for at once based on the search word.

Moreover, by using a filter that allows false positive in order to realize efficient search processing, transactions can be searched for on a block basis without leaking information on the search word.

According to the first embodiment, it is possible to provide a blockchain that maintains anonymity and handles transactions including addresses that are easy to manage.

Meanwhile, in the first embodiment, since the blockchain network 110 providing virtual currency transaction service is assumed, the target of the searchable ciphertext is an address. However, the configuration and processing described in the first embodiment can be applied to various items according to the service.

### Second embodiment

In a second embodiment, an address generation method is different. Hereinafter, the second embodiment will be described focusing on a difference from the first embodiment.

A system configuration of the second embodiment is the same as the system configuration of the first embodiment. Further, a hardware configuration and a module configuration of a connection apparatus 100 of the second embodiment are the same as those of the connection apparatus 100 of the first embodiment. A configuration of a processing node 101 of the second embodiment is the same as that of the processing node 101 of the first embodiment.

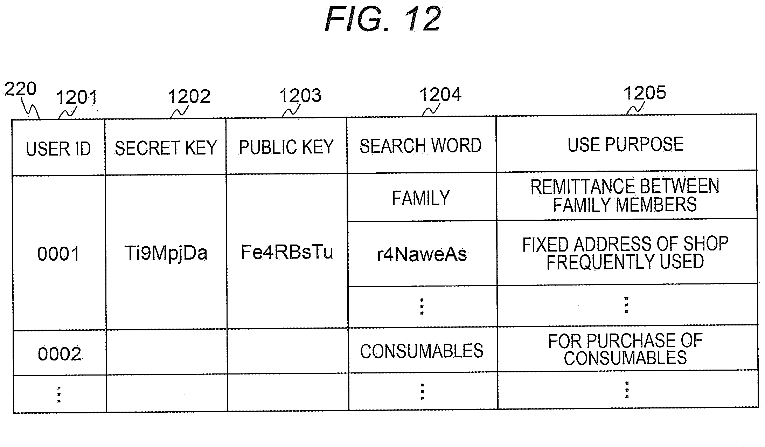

In the second embodiment, user management information 220 held by the connection apparatus 100 is partially different. Fig. 12 is a view showing an example of the user management information 220 according to the second embodiment.

The user management information 220 includes an entry formed by a user ID 1201, a secret key 1202, a public key 1203, a search word 1204, and a use purpose 1205. One entry corresponds to one user 150. The user ID 1201, the search word 1204, and the use purpose 1205 are the same fields as the user ID 401, the search word 402, and the use purpose 403.

The secret key 1202 is a field for storing a secret key. The public key 1203 is a field for storing a public key corresponding to the secret key.

Managing search words and keys in the user management information 220 enables enhancement of convenience of the user 150.

An address used in conventional virtual currency transaction service has a one-to-one relationship with a public key managed by the user 150 or a service provider. This is because data in which the hash operation has been executed on the public key is handled as an address.

In the second embodiment, the connection apparatus 100 generates searchable ciphertext by using, as inputs, a search word and an address (input address) generated by the conventional technique.

A connection processing unit 210 according to the second embodiment generates, in advance, a secret key and a public key corresponding to the secret key. The connection processing unit 210 stores the generated secret key and public key in the secret key 1202 and the public key 1203 of the user management information 220.

Meanwhile, a timing for generating the secret key and the public key may be when the user 150 has made a contract of the connection service, when the user 150 first starts using the connection service, and the like. Note that, in the second embodiment, the secret key and the public key are not limited by the generation timing.

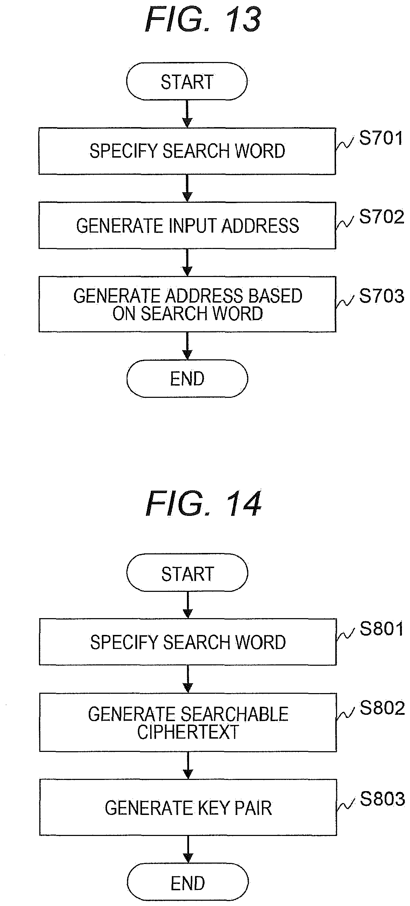

Fig. 13 is a flowchart describing an example of address generation processing executed by the connection apparatus 100 according to the second embodiment. It is assumed that the public key and the secret key have been generated before the start of the processing.

An encryption processing unit 211 specifies a search word (step S701), and generates an input address by using the public key (step S702). The processing in step S701 and step S702 may be executed at a same time, or the execution order may be exchanged.

Since a known technique may be used for generation processing of the input address, a detailed description will be omitted. For example, the input address is generated in accordance with a procedure as shown below.

(Generation Method 1) The connection processing unit 210 inputs the public key to a first hash function, and calculates a first hash value. The connection processing unit 210 inputs the first hash value to a second hash function, and calculates a second hash value. The connection processing unit 210 adds a prefix of the second hash value, inputs the second hash value to the third hash function, inputs an outputted value again to the third hash function, and acquires the third hash value. The connection processing unit 210 adds a checksum to the third hash value and encodes the third hash value into a predetermined format. The value obtained by the above processing is the input address.

(Generation Method 2) The connection processing unit 210 inputs the public key to the first hash function, and acquires a character string. The connection processing unit 210 performs processing such as deletion and addition of data on the character string, and adds predetermined data to the beginning of the character string. The value obtained by the above processing is the input address.

Next, the encryption processing unit 211 generates searchable ciphertext from the search word and the input address by using a first encryption key (step S703).

As a generation method of the searchable ciphertext, for example, the following can be considered. (1) The encryption processing unit 211 adds the search word and the input address to generate one data, and generates searchable ciphertext with the data as an input. (2) The encryption processing unit 211 executes a bit operation on the search word and the input address to generate one data, and generates searchable ciphertext with the data as an input. (3) The encryption processing unit 211 encrypts the search word by using the input address as a seed to be used for encryption processing.

Note that the above-described generation method is merely an example and is not limited to this. However, the generation method used by the connection apparatus 100 in the system is unified.

Note that, in the second embodiment, the searchable ciphertext is generated with use of the input address generated from the public key and of the search word, but is not limited to this. For example, an algorithm may be changed to generate searchable ciphertext with the public key and the search word as inputs.

In the second embodiment, the searchable ciphertext to be included in a search query is also generated by a method similar to the method shown in Fig. 13.

The search processing executed by the processing node 101 of the second embodiment is the same as that of the first embodiment.

According to the second embodiment, it is possible to generate a plurality of addresses from one public key (a pair of a public key and a secret key). This can suppress an increase in the number of keys to be managed, and enables protection of information by improving anonymity.

In addition, the address generation method described in the second embodiment can be incorporated in a generation method of an address (input address) of the prior art. Therefore, the present invention can be applied to the conventional system quickly and easily.

### Third embodiment

In a third embodiment, a generation method of a service public key and a service secret key to be used in a blockchain network 110 is different from the prior art.

In the prior art, the user 150 or the connection apparatus 100 have been required to manage multiple key pairs. In the third embodiment, a key pair is generated from searchable ciphertext when a connection apparatus 100 requires for processing. Hereinafter, the third embodiment will be described focusing on a difference from the first embodiment.

A system configuration of the third embodiment is the same as the system configuration of the first embodiment. Further, a configuration of the connection apparatus 100 of the third embodiment is the same as that of the connection apparatus 100 of the first embodiment. A configuration of a processing node 101 of the third embodiment is the same as that of the processing node 101 of the first embodiment.

Fig. 14 is a flowchart describing an example of key pair generation processing executed by the connection apparatus 100 according to the third embodiment.

The following processing is executed by an encryption processing unit 211 called by a connection processing unit 210 that executes processing requiring an encryption key. Note that the third embodiment is not limited by a type and an execution timing of the processing requiring the encryption key.

The encryption processing unit 211 specifies a search word (step S801), and generates searchable ciphertext from the search word by using a first encryption key (step S802).

Next, the encryption processing unit 211 generates a key pair (a secret key and a public key) by using the searchable ciphertext (step S803).

For example, ID-Based encryption is used as a key pair creation method. The ID-Based encryption is an encryption method using a predetermined identifier such as an E-mail address as a public key. In the ID-Based encryption, there is a reliable key generation system. The user 150 requests the key generation system to generate information necessary for processing secret key and the like.

In a case of adopting the above method, the connection processing unit 210 may simply have a function for realizing the key generation system. This allows the connection processing unit 210 to generate a secret key and a public key from the searchable ciphertext.

Meanwhile, information used by the function for realizing the key generation system is stored in at least one of a memory 202, a tamper resistant device 206, or a storage device 207.

According to the third embodiment, the connection apparatus 100 can generate a key pair from searchable ciphertext as required. Therefore, it is unnecessary for the user 150 or the connection apparatus 100 to manage multiple key pairs to be selectively used for each purpose.

In addition, in the third embodiment, since the connection apparatus 100 does not constantly hold the key pair, occurrence of security problems and the like, such as leakage of encryption keys, can be suppressed. Therefore, safe system operation becomes possible.

Note that the present invention is not limited to the above embodiments, and various modifications may be included. Further, for example, configurations of the embodiments described above have been illustrated in detail to facilitate description for easy understanding of the present invention, and are not necessarily limited to the embodiments that include all the illustrated configurations. Moreover, a part of a configuration of each embodiment may be deleted, replaced, or added with another configuration.

In addition, each of the above-described configurations, functions, processing parts, processing units, and the like may be realized by hardware, for example, by designing part or all of them with an integrated circuit or the like. Further, the present invention can be realized by a program code of software that realizes functions of the embodiments. In this case, a storage medium storing the program code is provided to a computer, and a processor included in the computer reads out the program code stored in the storage medium. In this case, the program code itself read from the storage medium realizes the functions of the above-described embodiments, and the program code itself and the storage medium storing the program code are to constitute the present invention. As a storage medium for supplying such a program code, for example, a flexible disk, a CD-ROM, a DVD-ROM, a hard disk, a solid state drive (SSD), an optical disk, a magnetooptical disk, a CD-R, a magnetic tape, a non-volatile memory card, a ROM, or the like is used.

In addition, the program code for realizing the functions described in this embodiment can be implemented with a wide range of programs or script languages such as assembler, C/C++, Perl, Shell, PHP, and Java (registered trademark).

Furthermore, by distributing the program code of the software that realizes the functions of the embodiment via a network, the program code may be stored in a storage unit such as a hard disk or a memory of a computer, or a storage medium such as CD-RW or CD-R, and the processor included in the computer may read and execute the program code stored in the storage unit or the storage medium.

In the embodiments described above, control lines and information lines indicate what is considered to be necessary for the description, and do not necessarily indicate all the control lines and the information lines on the product. All the configurations may be mutually connected.

## Claims

1. A computer system comprising a plurality of processing nodes constituting a blockchain network for providing service using a blockchain, and a connection apparatus that connects to the blockchain network, wherein
the plurality of processing nodes hold ledger information that is information including a history of transaction information in the service and for managing transactions, and is information in which blocks including a plurality of the transactions are connected in a chronological order;
the connection apparatus includes a connection processing unit that generates a transaction and transmits the transaction to at least one of the processing nodes;
the connection processing unit includes an encryption processing unit that generates searchable ciphertext from a keyword based on a probabilistic encryption method, wherein in the probabilistic encryption method plaintext and ciphertext have a one-to-many correspondence;
the encryption processing unit generates, from the keyword, the searchable ciphertext to be used as an address indicating a transmission source or a transmission destination of the transaction; and
the connection processing unit generates the transaction including the searchable ciphertext, wherein
the encryption processing unit generates an encryption key to be used for encryption and decryption of data related to the transaction, by using the searchable ciphertext, wherein
each of the processing nodes has a service processing unit that manages the ledger information;
the service processing unit of the at least one of the processing nodes includes a search processing unit that executes search processing of the transaction;
the connection processing unit
generates a search query for searching for a transaction including searchable ciphertext generated from a first keyword, and
transmits the search query to the at least one of the processing nodes; and
the search processing unit
performs a search for a transaction including searchable ciphertext generated from the first keyword by executing search processing based on the search query, and
returns a result of the search to the connection apparatus.

2. The computer system according to claim 1, wherein
the block includes a filter to specify the transaction included in the block;
the connection processing unit generates, by using the first keyword, a search filter to specify a block including a transaction including searchable ciphertext generated from the first keyword; and
the search processing unit
specifies a block including a transaction including searchable ciphertext generated from the first keyword, by comparing the filter included in the block and the search filter, and
executes search processing on the specified block based on the search query.

3. The computer system according to claim 2, wherein
the connection processing unit
generates filter generation information for generation of the filter by using the keyword, and
generates the transaction including the searchable ciphertext and the filter generation information; and
the service processing unit
determines a plurality of transactions to be included in a new block,
generates the filter by using the filter generation information included in the determined plurality of transactions, and
generates the new block including the filter and registers the new block in the ledger information.

4. The computer system according to claim 3, wherein
the connection processing unit
encrypts the keyword, and
generates the filter generation information by using the encrypted keyword.

5. The computer system according to claim 3, wherein
the connection processing unit
processes the filter generation information, and
generates the transaction including the searchable ciphertext and the processed filter generation information.

6. A connection apparatus comprising a plurality of processing nodes and connecting to a blockchain network for providing service using a blockchain, wherein
the plurality of processing nodes hold ledger information that is information including a history of transaction information in the service and for managing transactions, and is information in which blocks including a plurality of the transactions are connected in a chronological order;
the connection apparatus includes a connection processing unit that generates a transaction and transmits the transaction to at least one of the processing nodes;
the connection processing unit includes an encryption processing unit that generates searchable ciphertext from a keyword based on a probabilistic encryption method, wherein in the probabilistic encryption method plaintext and ciphertext have a one-to-many correspondence;
the encryption processing unit generates, from the keyword, the searchable ciphertext to be used as an address indicating a transmission source or a transmission destination of the transaction; and
the connection processing unit generates the transaction including the searchable ciphertext, wherein
the encryption processing unit generates an encryption key to be used for encryption and decryption of data related to the transaction, by using the searchable ciphertext, wherein
the connection processing unit
generates a search query for searching for a transaction including searchable ciphertext generated from a first keyword, and
transmits the search query to the at least one of the processing nodes.

7. The connection apparatus according to claim 6, wherein
the block includes a filter for specifying the transaction included in the block; and
the connection processing unit
generates, by using the first keyword, a search filter to specify a block including a transaction including searchable ciphertext generated from the first keyword.

8. The connection apparatus according to claim 7, wherein
the connection processing unit
generates filter generation information for generation of the filter by using the keyword, and
generates the transaction including the searchable ciphertext and the filter generation information; and
the ledger information stores a block including the filter by using the filter generation information included in the plurality of the transactions.

9. A data processing method executed by a connection apparatus, the connection apparatus comprising a plurality of processing nodes and connecting to a blockchain network for providing service using a blockchain, wherein
the plurality of processing nodes hold ledger information that is information including a history of transaction information in the service and for managing transactions, and is information in which blocks including the plurality of the transactions are connected in a chronological order, the data processing method comprising:
generating, by the connection apparatus, searchable ciphertext from a keyword based on a probabilistic encryption method, as an address indicating a transmission source or a transmission destination of a transaction, wherein in the probabilistic encryption method plaintext and ciphertext have a one-to-many correspondence;
generating, by the connection apparatus, the transaction including the searchable ciphertext, and transmitting the transaction to at least one of the processing nodes;
generating, by the connection apparatus, an encryption key to be used for encryption and decryption of data related to the transaction, by using the searchable ciphertext;
generating, by the connection apparatus, a search query for searching for a transaction including searchable ciphertext generated from a first keyword, and
transmitting, by the connection apparatus, the search query to the at least one of the processing nodes.

## Patentansprüche

1. Computersystem, umfassend eine Vielzahl von Verarbeitungsknoten, die ein Blockchain-Netz zur Bereitstellung eines Diensts unter Verwendung einer Blockchain bilden, und eine Verbindungsvorrichtung, die eine Verbindung mit dem Blockchain-Netz herstellt, wobei
die Vielzahl von Verarbeitungsknoten eine Kontoinformation führt, die eine Information ist, die einen Verlauf einer Transaktionsinformation hinsichtlich des Diensts umfasst und einer Verwaltung von Transaktionen dient, und eine Information ist, in der Blöcke, die eine Vielzahl der Transaktionen umfassen, in chronologischer Reihenfolge verbunden sind;
die Verbindungsvorrichtung eine Verbindungsverarbeitungseinheit umfasst, die eine Transaktion erzeugt und die Transaktion an zumindest einen der Verarbeitungsknoten überträgt;
die Verbindungsverarbeitungseinheit eine Verschlüsselungsverarbeitungseinheit umfasst, die basierend auf einem probabilistischen Verschlüsselungsverfahren einen durchsuchbaren Chiffretext aus einem Schlüsselwort erzeugt, wobei in dem probabilistischen Verschlüsselungsverfahren Klartext und Chiffretext eine Eins-zu-Viele-Entsprechung aufweisen;
die Verschlüsselungsverarbeitungseinheit aus dem Schlüsselwort den durchsuchbaren Chiffretext zur Verwendung als Adresse, die eine Übertragungsquelle oder ein Übertragungsziel der Transaktion angibt, erzeugt; und
die Verbindungsverarbeitungseinheit die Transaktion einschließlich des durchsuchbaren Chiffretexts erzeugt, wobei
die Verschlüsselungsverarbeitungseinheit einen Verschlüsselungsschlüssel zur Verwendung zur Verschlüsselung und Entschlüsselung von Daten, die mit der Transaktion in Beziehung stehen, durch Verwenden des durchsuchbaren Chiffretexts erzeugt, wobei
jeder der Verarbeitungsknoten eine Dienstverarbeitungseinheit aufweist, die die Kontoinformation verwaltet;
die Dienstverarbeitungseinheit des zumindest einen der Verarbeitungsknoten eine Suchverarbeitungseinheit umfasst, die eine Suchverarbeitung der Transaktion ausführt;
die Verbindungsverarbeitungseinheit
eine Suchabfrage zum Suchen nach einer Transaktion, die einen aus einem ersten Schlüsselwort erzeugten durchsuchbaren Chiffretext umfasst, erzeugt, und
die Suchabfrage an den zumindest einen der Verarbeitungsknoten überträgt; und
die Suchverarbeitungseinheit
eine Suche nach einer Transaktion, die einen aus dem ersten Schlüsselwort erzeugten durchsuchbaren Chiffretext umfasst, durch Ausführen einer Suchverarbeitung basierend auf der Suchabfrage durchführt, und
ein Ergebnis der Suche an die Verbindungsvorrichtung zurückgibt.

2. Computersystem nach Anspruch 1, wobei
der Block ein Filter zum Spezifizieren der in dem Block umfassten Transaktion umfasst;
die Verbindungsverarbeitungseinheit durch Verwenden des ersten Schlüsselworts ein Suchfilter zum Spezifizieren eines Blocks erzeugt, der eine Transaktion umfasst, die einen aus dem ersten Schlüsselwort erzeugten durchsuchbaren Chiffretext umfasst; und
die Suchverarbeitungseinheit
einen Block spezifiziert, der eine Transaktion umfasst, die einen aus dem ersten Schlüsselwort erzeugten durchsuchbaren Chiffretext umfasst, indem das in dem Block umfasste Filter und das Suchfilter verglichen werden, und
eine Suchverarbeitung an dem spezifizierten Block basierend auf der Suchabfrage ausführt.

3. Computersystem nach Anspruch 2, wobei
die Verbindungsverarbeitungseinheit
eine Filtererzeugungsinformation zur Erzeugung des Filters durch Verwenden des Schlüsselworts erzeugt, und
die Transaktion erzeugt, die den durchsuchbaren Chiffretext und die Filtererzeugungsinformation umfasst; und
die Dienstverarbeitungseinheit
eine Vielzahl von Transaktionen zur Einbeziehung in einen neuen Block ermittelt,
das Filter durch Verwenden der Filtererzeugungsinformation, die in der ermittelten Vielzahl von Transaktionen umfasst ist, erzeugt, und
den neuen Block erzeugt, der das Filter umfasst, und den neuen Block in der Kontoinformation registriert.

4. Computersystem nach Anspruch 3, wobei
die Verbindungsverarbeitungseinheit
das Schlüsselwort verschlüsselt, und
die Filtererzeugungsinformation durch Verwenden des verschlüsselten Schlüsselworts erzeugt.

5. Computersystem nach Anspruch 3, wobei
die Verbindungsverarbeitungseinheit
die Filtererzeugungsinformation verarbeitet, und
die den durchsuchbaren Chiffretext und die verarbeitete Filtererzeugungsinformation umfassende Transaktion erzeugt.

6. Verbindungsvorrichtung, die eine Vielzahl von Verarbeitungsknoten umfasst und eine Verbindung mit einem Blockchain-Netz zur Bereitstellung eines Diensts unter Verwendung einer Blockchain herstellt, wobei
die Vielzahl von Verarbeitungsknoten eine Kontoinformation führt, die eine Information ist, die einen Verlauf einer Transaktionsinformation hinsichtlich des Diensts umfasst und einer Verwaltung von Transaktionen dient, und eine Information ist, in der Blöcke, die eine Vielzahl der Transaktionen umfassen, in chronologischer Reihenfolge verbunden sind;
die Verbindungsvorrichtung eine Verbindungsverarbeitungseinheit umfasst, die eine Transaktion erzeugt und die Transaktion an zumindest einen der Verarbeitungsknoten überträgt;
die Verbindungsverarbeitungseinheit eine Verschlüsselungsverarbeitungseinheit umfasst, die basierend auf einem probabilistischen Verschlüsselungsverfahren einen durchsuchbaren Chiffretext aus einem Schlüsselwort erzeugt, wobei in dem probabilistischen Verschlüsselungsverfahren Klartext und Chiffretext eine Eins-zu-Viele-Entsprechung aufweisen;
die Verschlüsselungsverarbeitungseinheit aus dem Schlüsselwort den durchsuchbaren Chiffretext zur Verwendung als Adresse, die eine Übertragungsquelle oder ein Übertragungsziel der Transaktion angibt, erzeugt; und
die Verbindungsverarbeitungseinheit die Transaktion einschließlich des durchsuchbaren Chiffretexts erzeugt, wobei
die Verschlüsselungsverarbeitungseinheit einen Verschlüsselungsschlüssel zur Verwendung zur Verschlüsselung und Entschlüsselung von Daten, die mit der Transaktion in Beziehung stehen, durch Verwenden des durchsuchbaren Chiffretexts erzeugt, wobei
die Verbindungsverarbeitungseinheit
eine Suchabfrage zum Suchen nach einer Transaktion, die einen aus einem ersten Schlüsselwort erzeugten durchsuchbaren Chiffretext umfasst, erzeugt, und
die Suchabfrage an den zumindest einen der Verarbeitungsknoten überträgt.

7. Verbindungsvorrichtung nach Anspruch 6, wobei
der Block ein Filter zum Spezifizieren der in dem Block umfassten Transaktion umfasst; und
die Verbindungsverarbeitungseinheit
durch Verwenden des ersten Schlüsselworts ein Suchfilter zum Spezifizieren eines Blocks erzeugt, der eine Transaktion umfasst, die einen aus dem ersten Schlüsselwort erzeugten durchsuchbaren Chiffretext umfasst.

8. Verbindungsvorrichtung nach Anspruch 7, wobei
die Verbindungsverarbeitungseinheit
eine Filtererzeugungsinformation zur Erzeugung des Filters durch Verwenden des Schlüsselworts erzeugt, und
die Transaktion erzeugt, die den durchsuchbaren Chiffretext und die Filtererzeugungsinformation umfasst; und
die Kontoinformation einen Block speichert, der das Filter umfasst, indem die in der Vielzahl der Transaktionen umfasste Filtererzeugungsinformation verwendet wird.

9. Datenverarbeitungsverfahren, das durch eine Verbindungsvorrichtung ausgeführt wird, wobei die Verbindungsvorrichtung eine Vielzahl von Verarbeitungsknoten umfasst und eine Verbindung mit einem Blockchain-Netz zur Bereitstellung eines Diensts unter Verwendung einer Blockchain herstellt, wobei
die Vielzahl von Verarbeitungsknoten eine Kontoinformation führt, die eine Information ist, die einen Verlauf einer Transaktionsinformation hinsichtlich des Diensts umfasst und einer Verwaltung von Transaktionen dient, und eine Information ist, in der Blöcke, die die Vielzahl der Transaktionen umfassen, in chronologischer Reihenfolge verbunden sind, wobei das Datenverarbeitungsverfahren umfasst, dass:
durch die Verbindungsvorrichtung ein durchsuchbarer Chiffretext aus einem Schlüsselwort basierend auf einem probabilistischen Verschlüsselungsverfahren als Adresse erzeugt wird, die eine Übertragungsquelle oder ein Übertragungsziel einer Transaktion angibt,
wobei in dem probabilistischen Verschlüsselungsverfahren Klartext und Chiffretext eine Eins-zu-Viele-Entsprechung aufweisen;
durch die Verbindungsvorrichtung die Transaktion einschließlich des durchsuchbaren Chiffretexts erzeugt wird, und die Transaktion an zumindest einen der Verarbeitungsknoten übertragen wird;
durch die Verbindungsvorrichtung ein Verschlüsselungsschlüssel zur Verwendung zur Verschlüsselung und Entschlüsselung von Daten, die mit der Transaktion in Beziehung stehen, durch Verwenden des durchsuchbaren Chiffretexts erzeugt wird;
durch die Verbindungsvorrichtung eine Suchabfrage zum Suchen nach einer Transaktion, die einen aus einem ersten Schlüsselwort erzeugten durchsuchbaren Chiffretext umfasst, erzeugt wird, und
durch die Verbindungsvorrichtung die Suchabfrage an den zumindest einen der Verarbeitungsknoten übertragen wird.

## Revendications

1. Système informatique comprenant une pluralité de nœuds de traitement constituant un réseau de blockchain pour fournir un service en utilisant une blockchain, et un appareil de connexion qui se connecte au réseau de blockchain, dans lequel
la pluralité de nœuds de traitement détiennent des informations de grand livre qui sont des informations incluant un historique des informations de transaction dans le service et pour gérer les transactions, et sont des informations dans lesquelles des blocs incluant une pluralité des transactions sont connectés dans un ordre chronologique ;
l'appareil de connexion inclut une unité de traitement de connexion qui génère une transaction et transmet la transaction à au moins un des nœuds de traitement ;
l'unité de traitement de connexion inclut une unité de traitement de cryptage qui génère un texte chiffré recherchable à partir d'un mot clé sur la base d'un procédé de cryptage probabiliste, dans lequel, dans le procédé de cryptage probabiliste, le texte en clair et le texte chiffré ont une correspondance un à plusieurs ;
l'unité de traitement de cryptage génère, à partir du mot clé, le texte chiffré recherchable à utiliser comme une adresse indiquant une source de transmission ou une destination de transmission de la transaction ; et
l'unité de traitement de connexion génère la transaction incluant le texte chiffré recherchable, dans lequel
l'unité de traitement de cryptage génère une clé de cryptage à utiliser pour le cryptage et le décryptage de données liées à la transaction, en utilisant le texte chiffré recherchable, dans lequel
chacun des nœuds de traitement présente une unité de traitement de service qui gère les informations de grand livre ;
l'unité de traitement de service dudit au moins un des nœuds de traitement inclut une unité de traitement de recherche qui exécute un traitement de recherche de la transaction ;
l'unité de traitement de connexion
génère une requête de recherche pour rechercher une transaction incluant un texte chiffré recherchable généré à partir d'un premier mot clé, et
transmet la requête de recherche audit au moins un des nœuds de traitement ; et
l'unité de traitement de recherche
effectue une recherche d'une transaction incluant un texte chiffré recherchable généré à partir du premier mot clé en exécutant un traitement de recherche sur la base de la requête de recherche, et
renvoie un résultat de la recherche à l'appareil de connexion.

2. Système informatique selon la revendication 1, dans lequel
le bloc inclut un filtre pour spécifier la transaction incluse dans le bloc ;
l'unité de traitement de connexion génère, en utilisant le premier mot clé, un filtre de recherche pour spécifier un bloc incluant une transaction incluant un texte chiffré recherchable généré à partir du premier mot clé ; et
l'unité de traitement de recherche
spécifie un bloc incluant une transaction incluant un texte chiffré recherchable généré à partir du premier mot clé, en comparant le filtre inclus dans le bloc et le filtre de recherche, et
exécute un traitement de recherche sur le bloc spécifié sur la base de la requête de recherche.

3. Système informatique selon la revendication 2, dans lequel
l'unité de traitement de connexion
génère des informations de génération de filtre pour la génération du filtre en utilisant le mot clé, et
génère la transaction incluant le texte chiffré recherchable et les informations de génération de filtre ; et
l'unité de traitement de service
détermine une pluralité de transactions à inclure dans un nouveau bloc,
génère le filtre en utilisant les informations de génération de filtre incluses dans la pluralité déterminée de transactions, et
génère le nouveau bloc incluant le filtre et enregistre le nouveau bloc dans les informations de grand livre.

4. Système informatique selon la revendication 3, dans lequel
l'unité de traitement de connexion
crypte le mot-clé, et
génère les informations de génération de filtre en utilisant le mot-clé crypté.

5. Système informatique selon la revendication 3, dans lequel
l'unité de traitement de connexion
traite les informations de génération de filtre, et
génère la transaction incluant le texte chiffré recherchable et les informations de génération de filtre traitées.

6. Appareil de connexion comprenant une pluralité de nœuds de traitement et se connectant à un réseau de blockchain pour fournir un service en utilisant une blockchain, dans lequel
la pluralité de nœuds de traitement détiennent des informations de grand livre qui sont des informations incluant un historique des informations de transaction dans le service et pour gérer les transactions, et sont des informations dans lesquelles des blocs incluant une pluralité des transactions sont connectés dans un ordre chronologique ;
l'appareil de connexion inclut une unité de traitement de connexion qui génère une transaction et transmet la transaction à au moins un des nœuds de traitement ;
l'unité de traitement de connexion inclut une unité de traitement de cryptage qui génère un texte chiffré recherchable à partir d'un mot clé sur la base d'un procédé de cryptage probabiliste, dans lequel, dans le procédé de cryptage probabiliste, le texte en clair et le texte chiffré ont une correspondance un à plusieurs ;
l'unité de traitement de cryptage génère, à partir du mot clé, le texte chiffré recherchable à utiliser comme une adresse indiquant une source de transmission ou une destination de transmission de la transaction ; et
l'unité de traitement de connexion génère la transaction incluant le texte chiffré recherchable, dans lequel
l'unité de traitement de cryptage génère une clé de cryptage à utiliser pour le cryptage et le décryptage de données liées à la transaction, en utilisant le texte chiffré recherchable, dans lequel
l'unité de traitement de connexion
génère une requête de recherche pour rechercher une transaction incluant un texte chiffré recherchable généré à partir d'un premier mot clé, et
transmet la requête de recherche audit au moins un des nœuds de traitement.

7. Appareil de connexion selon la revendication 6, dans lequel
le bloc inclut un filtre pour spécifier la transaction incluse dans le bloc ; et
l'unité de traitement de connexion
génère, en utilisant le premier mot clé, un filtre de recherche pour spécifier un bloc incluant une transaction incluant un texte chiffré recherchable généré à partir du premier mot clé.

8. Appareil de connexion selon la revendication 7, dans lequel
l'unité de traitement de connexion
génère des informations de génération de filtre pour la génération du filtre en utilisant le mot clé, et
génère la transaction incluant le texte chiffré recherchable et les informations de génération de filtre ; et
les informations de grand livre stockent un bloc incluant le filtre en utilisant les informations de génération de filtre incluses dans la pluralité des transactions.

9. Procédé de traitement de données exécuté par un appareil de connexion, l'appareil de connexion comprenant une pluralité de nœuds de traitement et se connectant à un réseau de blockchain pour fournir un service en utilisant une blockchain, dans lequel
la pluralité de nœuds de traitement détiennent des informations de grand livre qui sont des informations incluant un historique des informations de transaction dans le service et pour gérer les transactions, et sont des informations dans lesquelles des blocs incluant la pluralité des transactions sont connectés dans un ordre chronologique, le procédé de traitement de données comprenant les étapes consistant à :
générer, par l'appareil de connexion, un texte chiffré recherchable à partir d'un mot clé sur la base d'un procédé de cryptage probabiliste, comme une adresse indiquant une source de transmission ou une destination de transmission d'une transaction, dans lequel, dans le procédé de cryptage probabiliste, le texte en clair et le texte chiffré ont une correspondance un à plusieurs ;
générer, par l'appareil de connexion, la transaction incluant le texte chiffré recherchable, et transmettre la transaction à au moins un des nœuds de traitement ;
générer, par l'appareil de connexion, une clé de cryptage à utiliser pour le cryptage et le décryptage de données liées à la transaction, en utilisant le texte chiffré recherchable ;
générer, par l'appareil de connexion, une requête de recherche pour rechercher une transaction incluant un texte chiffré recherchable généré à partir d'un premier mot clé, et
transmettre, par l'appareil de connexion, la requête de recherche audit au moins un des nœuds de traitement.
